# EUROPÄISCHE PATENTSCHRIFT

(11) **EP 2 084 052 B1**
(45) Veröffentlichungstag und Bekanntmachung des Hinweises auf die Patenterteilung: **31.03.2010**
(21) Anmeldenummer: 07819064.2
(22) Anmeldetag: 17.10.2007
(51) Int. Cl.: B62D 65/06, B62D 65/18

(54) **ARBEITSSTATION ZUR VERBINDUNG VON KAROSSERIETEILEN EINES KRAFTFAHRZEUGS, FERTIGUNGSSTRASSE MIT EINER SOLCHEN ARBEITSSTATION SOWIE VERFAHREN ZUM ZUSTELLEN/WECHSELN VON SPANNRAHMEN IN EINER ARBEITSSTATION**
WORK STATION FOR JOINING BODY PARTS OF A MOTOR VEHICLE, ASSEMBLY LINE COMPRISING SUCH A WORK STATION, AND METHOD FOR DELIVERING/REPLACING CLAMPING FRAMES IN A WORK STATION
POSTE DE TRAVAIL CONÇU POUR RELIER DES PIÈCES DE CARROSSERIE D'UN VÉHICULE À MOTEUR, CHAÎNE DE PRODUCTION ÉQUIPÉE D'UN TEL POSTE DE TRAVAIL ET PROCÉDÉ PERMETTANT D'AVANCER/DE CHANGER DES CADRES DE SERRAGE DANS UN POSTE DE TRAVAIL

(30) Priorität: 20.10.2006 DE 102006049647
(43) Veröffentlichungstag der Anmeldung: 05.08.2009
(73) Patentinhaber: AUDI AG, 85045 Ingolstadt (DE)
(72) Erfinder: ARBESMEIER, Bernhard, 93336 Altmannstein-Hagenhill (DE); BREME, Michael, 85088 Vohburg (DE); HOFSTETTER, Franz, 85238 Petershausen (DE); WALTL, Hubert, 85107 Baar-Ebenhausen (DE); BERINGER, Ernst, 85110 Schambach (DE); VOLLNHALS, Ralf, 85080 Gaimersheim (DE); HERZOG, Frank, 85092 Kösching (DE)
(74) Vertreter: Geissler, Manfred
(86) Internationale Anmeldenummer: PCT/EP2007/008996
(87) Internationale Veröffentlichungsnummer: WO 2008/046601

(56) Entgegenhaltungen:
- EP-A- 0 574 779
- EP-A- 1 642 693
- DE-A1- 3 823 947
- DE-A1- 19 945 093
- DE-U1- 9 105 490

## Beschreibung

Die Erfindung betrifft eine Arbeitsstation einer Fertigungsstraße zur Verbindung von Karosserieteilen eines Kraftfahrzeugs nach dem Oberbegriff des Patentanspruches 1, eine Fertigungsstraße mit einer solchen Arbeitsstation nach dem Patentanspruch 14 sowie ein Verfahren zum Zustellen und/oder Wechseln von Spannrahmen in einer Arbeitsstation nach dem Patentanspruch 15.

In bekannten Fertigungsstraßen werden Kraftfahrzeug-Rohkarosserien zu aufeinander folgenden Arbeitsstationen transportiert, in denen die Rohkarosserien bearbeitet und/oder an einen entlang der Fertigungsstraße transportierten Karosserieaufbau Karosserieteile verschweißt werden. In einer Schweißstation werden die an den Karosserieaufbau zu verschweißenden Karosserieteile mittels Spannrahmen in eine definierte schweißgerechte Lage gegenüber dem Karosserieaufbau gebracht.

Eine gattungsgemäße Arbeitsstation einer solchen Fertigungsstraße ist aus der DE 38 23 947 C2 bekannt. Die Arbeitsstation weist eine Zustellvorrichtung zum Zustellen zumindest eines Spannrahmens zum Karosserieaufbau auf. Die Zustellvorrichtung weist zumindest einen Schlitten auf, der den Spannrahmen innerhalb zumindest eines Spannrahmenmagazins in Querrichtung zur Fertigungsstraße verstellt. Außerdem weist die Zustellvorrichtung eine Hubeinrichtung auf, die den Spannrahmen zwischen dem Spannrahmenmagazin und der Arbeitsstation verstellt.

Konkret ist der in der DE 38 23 947 C2 gezeigten Arbeitsstation ein oberes Spannrahmenmagazin sowie ein unteres Spannrahmenmagazin zugeordnet, in denen jeweils zwei zueinander benachbarte Querschlitten quer zur Förderstrecke des Karosserieaufbaus verstellbar sind und Spannrahmen unterschiedlichen Rahmentyps tragen. Zur Zustellung wird einer der Spannrahmen mittels Greifvorrichtungen von Querschlitten auf Heberschlitten übertragen, die die Spannrahmen in Vertikalrichtung in die Arbeitsstation verstellen. Anschließend werden die Spannrahmen mittels Greiforgane vom jeweiligen Heberschlitten entnommen und auf Zustell-Arbeitsschlitten in der Arbeitsstation übertragen. Mittels dieser Arbeitsschlitten werden die Spannrahmen dem Karosserieaufbau zugestellt. Die Querschlitten der Spannrahmenmagazine, die Heberschlitten, sowie die Zustell-Arbeitsschlitten sind voneinander separate Vorrichtungen, zwischen denen die Spannrahmen in zeitaufwendiger Weise sowie mittels Greiforganen konstruktiv und prozesstechnisch aufwendig übertragen werden.

Aus der EP 0 585 584 B1 ist eine weitere Arbeitsstation einer Fertigungsstraße bekannt, der ein Spannrahmenmagazin zugeordnet ist, in dem vertikal übereinander angeordnete Spannrahmen mittels eines Hubschlittens in Vertikalrichtung verstellbar sind. In der mittleren Ebene des Spannrahmenmagazins befindet sich die Arbeitsstation mit Zustellschlitten, die die Spannrahmen vom Hubschlitten übernehmen und einem Karosserieaufbau zustellen können.

Aus der EP 0 582 117 B1 ist eine Arbeitsstation einer Fertigungsstraße bekannt, bei der eine Zustellvorrichtung seitlich neben dem Fahrzeugaufbau angeordnet ist. Die Zustellvorrichtung weist einen horizontalen Aufnahmerahmen auf, der um eine vertikale Drehachse schwenkbar ist. Bei einem Rahmenwechsel wird von einer zur Zustellvorrichtung separaten Zuführvorrichtung ein Spannrahmen übergeben. Dieser Spannrahmen wird dann in einer Drehbewegung um die Vertikalachse zum Fahrzeugaufbau geschwenkt und mittels einer teleskopartig verstellbaren Zustellvorrichtung dem Fahrzeugaufbau zugestellt. Aus der weiteren DE 102 15 016 B4 ist ebenfalls eine Spannrahmen-Dreheinheit bekannt, die von einer separaten Zuführeinrichtung mit Spannrahmen bestückt wird. Die Spannrahmen-Dreheinheit überträgt die Spannrahmen zu einer Hebevorrichtung, die den Spannrahmen in die Arbeitsstation anhebt.

Die Aufgabe der vorliegenden Erfindung besteht darin, eine Arbeitsstation, eine Fertigungsstraße oder ein Verfahren zum Zustellen und/oder zum Wechseln von Spannrahmen in einer Arbeitsstation bereitzustellen, bei dem ein Spannrahmenwechsel bzw. eine Spannrahmenzustellung zeitsparend und prozesssicher erfolgt.

Die Aufgabe der Erfindung ist durch die Merkmale des Patentanspruches 1, des Patentanspruches 14 oder des Patentanspruches 15 gelöst. Vorteilhafte Weiterbildungen der Erfindung sind in den jeweiligen Unteransprüchen offenbart.

Gemäß dem kennzeichnenden Teil des Patentanspruches 1 bildet der im Spannrahmenmagazin angeordnete Schlitten zusammen mit der Hubeinrichtung, die den Spannrahmen vom Spannrahmenmagazin zur Arbeitsstation verstellt, eine bewegungsgekoppelte Baueinheit, die den Spannrahmen haltert. Die aus dem Schlitten des Spannrahmenmagazins und der Hubeinrichtung bestehende, erfindungsgemäße Baueinheit ermöglicht in einer Doppelfunktion eine Zustellung sowie einen Wechsel des Spannrahmens, ohne dass der Spannrahmen mittels zusätzlicher Greiforgane zwischen querbeweglichen Zustellschlitten und/oder Hubschlitten übertragen werden muss, wie es im Stand der Technik der Fall ist. Auf diese Weise kann eine Zustellung vom Spannrahmenmagazin und/oder ein Wechsel des Spannrahmens prozesssicher sowie zeitsparend erfolgen.

Mit der erfindungsgemäßen Arbeitsstation sind daher die An- und Abdockvorgänge zur Zustellung bzw. zum Wechseln des Spannrahmens auf ein Minimum reduziert. Lediglich der Spannrahmen wird bei einem Fahrzeugtypwechsel mechanisch an eine Positionier- und Verriegelungseinheit an- bzw. abgedockt.

Zum Einsatz in der Großserienproduktion ist die erfindungsgemäße Arbeitsstation so ausgelegt, dass der Wechsel der Spannrahmen während der Transportzeit des Karosserieaufbaus zur Arbeitsstation erfolgt. Wie bereits erwähnt, ist durch die kompakte Ausführung der Wechseleinheit der Produktionsflächenverbrauch gering, da keine zusätzliche Leerstationen vor und nach der Arbeitsstation erforderlich sind.

Für einen minimalen Flächenbedarf der Arbeitsstation in der Produktionsebene kann das zugeordnete Spannrahmenmagazin raumsparend oberhalb der Arbeitsstation quer zur Förderstrecke des Karosserieaufbaus als ein Portal angeordnet sein.

Erfindungsgemäß erfolgt die Zustellung und/oder der Wechsel der Spannrahmen - bei einem geringen Flächenbedarf in der Fertigungsebene - nur in der Arbeitsstation, ohne dass zusätzliche vor- oder nachgelagerte Leerstationen erforderlich sind.

Für eine kompakte Anordnung der Spannrahmen im Rahmenmagazin bzw. für einen prozesstechnisch einfachen Rahmenwechsel kann der im Rahmenmagazin verschiebbare Schlitten bzw. die Baueinheit zumindest zwei Spannrahmen unterschiedlichen Rahmentyps tragen. Um die beiden Spannrahmen in der Hubrichtung voneinander unabhängig verstellen zu können, kann die aus Schlitten und Hubvorrichtung bestehende Baueinheit zusätzlich für jeden Spannrahmen eine separate Hubeinrichtung aufweisen, die unabhängig von der anderen Hubeinrichtung ansteuerbar ist.

Die den zumindest einen Spannrahmen zugeordnete Hubeinrichtung der Baueinheit kann den Spannrahmen von einer Bereitstellungsposition innerhalb des Rahmenmagazins zu einer Arbeitsposition z. B. vertikal verstellen, bei der der Spannrahmen in der Arbeitsstation angeordnet ist. Ausgehend von der Arbeitsposition kann anschließend der Spannrahmen mittels des Schlittens in einer Zustellrichtung in eine Spannposition verstellt werden, in der er in schweißgerechte Anlage mit dem Karosseriebau ist. Da diese Zustellbewegung durch den im Rahmenmagazin angeordneten Schlitten erfolgt, ist keine separate Zustellvorrichtung im Bereich der Arbeitsstation erforderlich.

Zur lagerichtigen Festlegung des Karosserieaufbaus kann die Arbeitsstation bodenseitig einen Grundrahmen mit Anbindungspunkten aufweisen, an denen der Karosserieaufbau befestigbar ist. Die Anbindungspunkte des Grundrahmens können ggf. zur Anpassung an unterschiedliche Karosserieaufbauten verschiebbar sein.

Bevorzugt ist die Arbeitsstation mit dem Grundrahmen, den Positioniersäulen und/oder der Positionier- und Verriegelungseinheit in Modulbauweise ausgeführt. Dadurch ist die Arbeitsstation für verschiedene Fahrzeugtypen im Baukastenprinzip universell einsetzbar. Von den Modulen der Arbeitsstation kann bevorzugt lediglich der Spannrahmen typabhängig sein, während die weiteren Module typunabhängig sein können.

Wie oben bereits erwähnt ist, wird der in die Arbeitsstation verstellte Spannrahmen durch eine entsprechende Zustellbewegung des Schlittens im Rahmenmagazin der Karosserie zugestellt. Zur lagerichtigen Positionierung des Spannrahmens weist die Arbeitsstation Positioniersäulen auf, die am Boden der Arbeitsstation verankert sind. In der Spannposition, in der das im Spannrahmen gehalterte Karosserieteil lagerichtig in Anlage mit dem Karosserieaufbau ist, positioniert der Schlitten den Spannrahmen an den Positioniersäulen. Der Spannrahmen wird dann mittels Verriegelungselementen an den Positioniersäulen verriegelt.

Vorteilhaft ist es, wenn dem der Arbeitsstation zugeführten Karosserieaufbau jeweils ein Paar benachbarter Schlitten zugeordnet ist, von denen jeder zumindest einen Spannrahmen für jeweils ein Karosserie-Seitenteil trägt. Durch entsprechende Ansteuerung der beiden benachbarten Schlitten können so dem Karosserieaufbau beidseitig Karosserieseitenteile zugestellt werden.

Für den Fall eines Karosserietypwechsels in der Fertigungsstraße ist es erforderlich, die eingesetzte Spannrahmen für die Seitenkarosserieteile zu wechseln. Um hierbei einen schnellen Rahmenwechsel zu gewährleisten, ist es bevorzugt, wenn dem zumindest einen Schlitten jeweils zumindest ein Spannrahmen eines ersten Rahmentyps und ein Spannrahmen eines zweiten Rahmentyps zugeordnet sind. Die beiden Spannrahmen unterschiedlicher Rahmentypen sind jeweils einem ersten bzw. einem zweiten Karosserietyp angepasst.

Sofern in dem Spannrahmenmagazin zumindest ein Paar benachbarter Schlitten vorgesehen ist, können die Schlitten des ersten Paars Spannrahmen eines ersten und eines zweiten Rahmentyps, und die Schlitten des zweiten Paars Spannrahmen eines dritten und vierten Rahmentyps aufweisen. Auf diese Weise können jeweils Spannrahmen von vier unterschiedlichen Rahmentypen mit gegenüberliegenden Karosserieseitenteilen korrespondierender Karosserietypen bestückt werden und/oder diese lagerichtig positionieren. Der Karosserieaufbau kann daher in der Arbeitsstation gleichzeitig mit einem linken Karosserieseitenteil und einem gegenüberliegenden rechten Karosserieseitenteil lagerichtig verbunden werden.

Bei den benachbarten Schlitten eines Schlitten-Paars ist es bevorzugt, wenn die Schlitten gegenläufig aufeinander zu bzw. voneinander wegbewegbar sind. Auf diese Weise können die benachbarten Schlitten jeweils eine Zustellbewegung der Spannrahmen in die Spannposition bzw. eine entgegengesetzte Öffnungsbewegung der Spannrahmen ausführen.

Bei einem Schlitten-Paar, von denen jeder der beiden Schlitten einen Spannrahmen des ersten Rahmentyps und einen Spannrahmen des zweiten Rahmentyps trägt, kann der Rahmentypwechsel aufgrund eines Karosserietypwechsels vom ersten auf den zweiten Karosserietyp wie folgt stattfinden: Eine erste Hubeinrichtung des ersten Schlittens und eine erste Hubeinrichtung des zweiten Schlittens stellen die noch im Einsatz befindlichen Spannrahmen des ersten Rahmentyps zurück in das Spannrahmenmagazin. Gleichzeitig können eine zweite Hubeinrichtung des ersten Schlittens und eine zweite Hubeinrichtung des zweiten Schlittens die Spannrahmen des zweiten Rahmentyps zur Arbeitsstation verstellen. Diese Zustell- und Rückstellvorgänge für den Spannrahmen-Wechsel können von dem Schlitten-Paar vorzugsweise gleichzeitig vorgenommen werden.

Gemäß einer Ausführungsform, kann das Spannrahmenmagazin mit einer Rüststation in Verbindung sein, mittels der die im Rahmenmagazin gelagerten Spannrahmen mit den Karosserieteilen bestückt werden können. Alternativ kann der Arbeitsstation eine Rüststation vorgeschaltet sein, in der die Karosserieteile lose zusammenfügbar sind. D. h. die Karosserieteile werden lose am Karosserieaufbau gehaltert, woraufhin der Karosserieaufbau in die Arbeitsstation transportiert wird. In der Arbeitsstation bringen die jeweiligen Spannrahmen die Karosserieteile in eine schweißgerechte Position gegenüber dem Karosserieaufbau.

Nachfolgend ist ein Ausführungsbeispiel der Erfindung anhand der beigefügten Figuren beschrieben.

Es zeigen:
- Fig. 1: in einer perspektivischen Ansicht einen Ausschnitt aus einer Fertigungsstraße mit einer Schweißstation mit zugeordnetem Spannrahmenmagazin;
- Fig. 2: eine in der Schweißstation angeordnete Befestigungsbaugruppe zur lagegenauen Fixierung der Spannrahmen sowie des Fahr- zeugaufbaus;
- Fig. 3: einen Grundrahmen der in der Fig. 2 gezeigten Befestigungs- baugruppe zur Fixierung des Fahrzeugaufbaus;
- Fig.4: in einer perspektivischen Ansicht einen Spannrahmen zur Halterung eines Karosserieteils; und
- Fig. 5 und 6: jeweils grob schematisch Teilseitenansichten der Arbeitsstation mit zugeordnetem Spannrahmenmagazin während eines Spannrahmenwechsels.

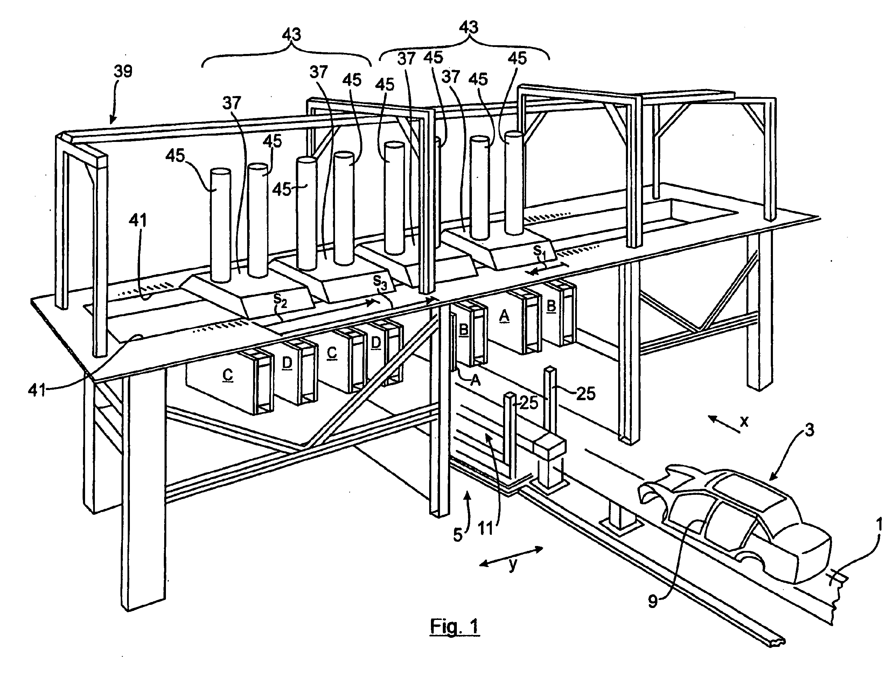

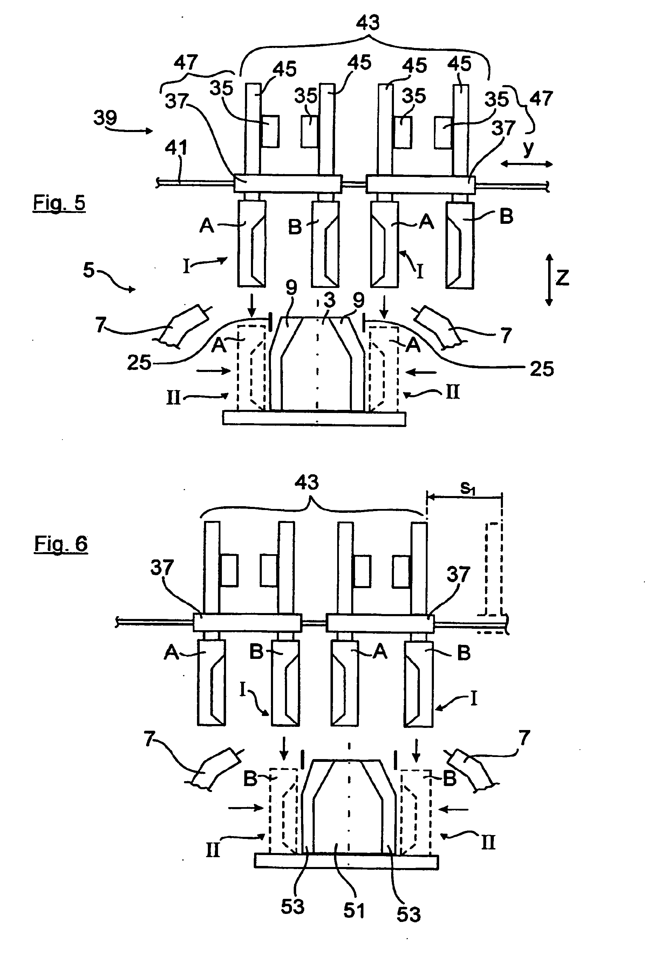

In der Fig. 1 ist ein Ausschnitt aus einer Fertigungsstraße 1 gezeigt, auf der ein Fahrzeugaufbau 3 eines ersten Fahrzeugtyps zu aufeinander folgende Arbeitsstationen transportiert wird, von denen beispielhaft eine Schweißstation 5 in der Fig. 1 gezeigt ist. Der Schweißstation 5 ist eine nicht dargestellte Rüststation vorgeschaltet, in der die Karosserieseitenteile 9 des ersten Fahrzeugtyps lose an beiden Seiten des Karosserieaufbaus 3 gehaltert bzw. vorpositioniert werden. Die Arbeitsstation 5 ist eine Schweißstation mit entsprechenden Roboterapplikationen für die Bearbeitung des Fahrzeugaufbaus 3. Hierzu weist die Arbeitsstation 5 in bekannter Weise Schweißroboter 7 auf, die lediglich in den Fig. 5 und 6 schematisch dargestellt sind.

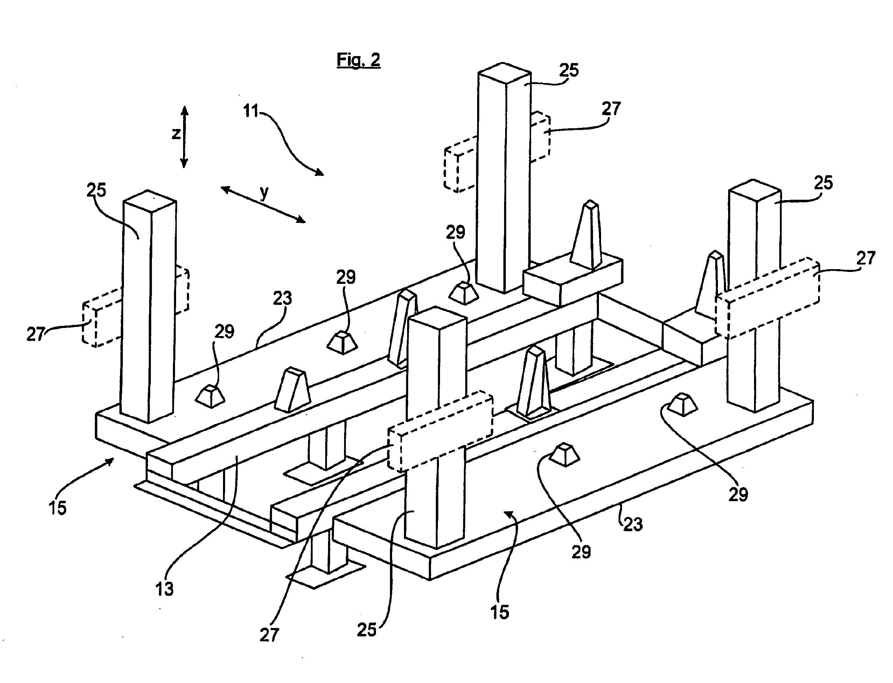

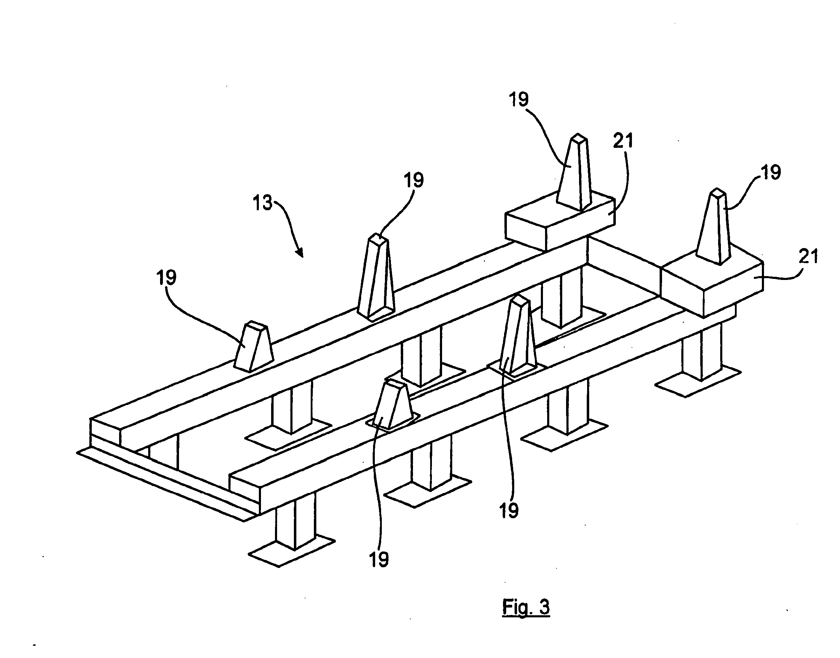

Gemäß der Fig. 1 weist die Arbeitsstation 5 eine Befestigungsbaugruppe 11 auf, die in der Fig. 2 in Alleinstellung gezeigt ist. Die Befestigungsbaugruppe 11 ist im wesentlichen zweiteilig aus dem in der Fig. 3 gezeigten Grundrahmen 13 und aus einer Positionier- und Verriegelungseinheit 15 für später beschriebene Spannrahmen A, B, C, D gebildet. Der Grundrahmen 13 weist gemäß der Fig. 3 Anbindungspunkte 19 unterschiedlicher Bauart auf, an denen der in die Arbeitsstation 5 geführte Fahrzeugaufbau 3 festgelegt wird. Von den Anbindungspunkten 19 sind die beiden hinteren stirnseitigen Anbindungspunkte 19 auf Verschiebeeinheiten 21 montiert, damit die Lage der Anbindungspunkte in x-Richtung unterschiedlichen Karosserietypen angepasst werden können.

Die Positionier- und Verriegelungseinheit 15 ist gemäß der Fig. 2 an beiden Längsseiten außerhalb des Grundrahmens 13 jeweils mit einer Grundplatte 23 am Boden der Arbeitsstation 5 verankert. Jede der seitlichen Grundplatten 23 weist an ihren seitlich äußeren Ecken Positioniersäulen 25 auf. Wie später beschrieben ist, werden die Spannrahmen A, B, C, D nach einer Zustellbewegung in der Querrichtung y außenseitig gegen die Positioniersäulen 25 in eine Spannposition positioniert, sowie mittels angedeuteter Verriegelungselemente 27 in dieser Spannposition lagerichtig verriegelt. In jeder der beiden seitlichen Grundplatten 23 der Positionier- und Verriegelungseinheit 15 sind jeweils drei voneinander beabstandete Höhenanschläge 29 zur lagerichtigen Höhenpositionierung der Spannrahmen A, B, C, D in der z-Richtung vorgesehen.

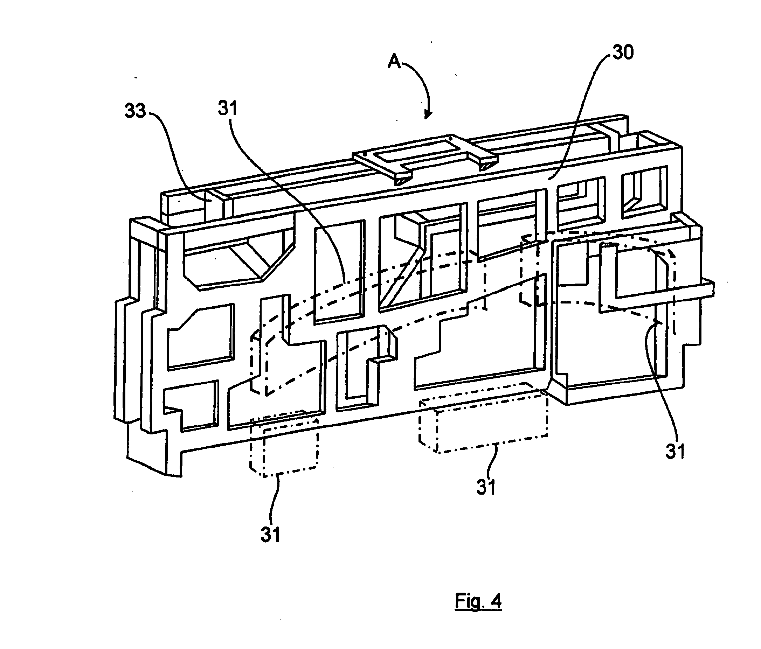

In der Fig. 4 ist beispielhaft ein Spannrahmen A eines ersten Rahmentyps für die Karosserieseitenteile 9 des ersten Fahrzeugtyps gezeigt. Der Spannrahmen A weist einen Grundrahmen 30 mit strichpunktiert angedeuteten typspezifischen Spannstellen-Bereichen 31 auf, um das jeweilige Karosserieseitenteil 9 in eine gewünschte Fügeposition gegenüber dem Karosserieaufbau 3 zu spannen. Der in der Fig. 4 gezeigte Spannrahmen A ist der geometriebestimmende Teil der Arbeitsstation 5, mit welchem die Maßhaltigkeit und die Qualität der zu verschweißenden Karosserieteile bestimmt wird. Der Spannrahmen A des ersten Rahmentyps wird für den genannten ersten Fahrzeugtyp in Form einer Sonderanfertigung bereitgestellt.

Die weiteren Spannrahmen B, C, D sind jeweils von einem zweiten, dritten und vierten Rahmentyp. Wie der Spannrahmen A sind auch die Spannrahmen B, C, D als Sonderanfertigungen jeweils einem zweiten, dritten und vierten Fahrzeugtypen angepasst. Grundsätzlich sind jedoch die Spannrahmen B, C, D von gleichem Aufbau wie der Spannrahmen A.

An seiner Oberseite ist der in der Fig. 4 gezeigte Spannrahmen A mit einem Andockrahmen 33 ausgebildet, mittels dem der Spannrahmen A an einer später beschriebenen Hubeinrichtung 35 eines Querschlittens 37 gehaltert ist. Gemäß der Fig. 1 sind insgesamt vier solche Querschlitten 37 in einem Spannrahmenmagazin 39 angeordnet und in einer y-Richtung quer zur Transportrichtung x auf Führungsschienen 41 verstellbar gehaltert. Das Spannrahmenmagazin 39 erstreckt sich dabei portalartig über die Arbeitsstation 5. Die Hubeinrichtungen 35 der Schlitten 37 sind in den Fig. 5 und 6 angedeutet. In der Fig. 1 sind die Hubeinrichtungen 35 aus Gründen der Übersichtlichkeit weggelassen.

In den Fig. 5 und 6 ist dem, der Arbeitsstation 5 zugeführten Karosserieaufbau 3 jeweils ein Schlitten-Paar 43 mit einem ersten und einem zweiten Querschlitten 37 zugeordnet, die in dem Spannrahmenmagazin 39 in der Querrichtung y geführt sind. Jeder der beiden Querschlitten 37 weist zwei Hubeinrichtungen 35 auf, die jeweils über ein nicht näher gezeigtes Hubgurtsystem in Eingriff mit einer höhenverstellbaren Tragsäule 45 sein können. Jeder der vier Querschlitten 37 bildet zusammen mit seinen beiden zugeordneten Hubeinrichtungen 35 eine bewegungsgekoppelte Baueinheit 47. Gemäß der Fig. 1 sind daher insgesamt vier querverschiebliche Baueinheiten 47 im Spannrahmenmagazin 39 angeordnet.

Am unteren Ende der Tragsäulen 45 der Hubeinrichtungen 35 des ersten und des zweiten Querschlittens 37 sind jeweils der Spannrahmen A des ersten Rahmentyps und der Spannrahmen B des zweiten Rahmentyps gehaltert. Die Spannrahmen A des ersten Rahmentyps bzw. die Spannrahmen B des zweiten Rahmentyps sind so zueinander ausgerichtet, dass jeweils gegenüberliegende Karosserieseitenteile 9 des ersten Fahrzeugtyps bzw. Karosserieseitenteile 53 des zweiten Fahrzeugtyps gespannt werden können.

Das Verfahren zur Spannrahmen-Zustellung und/oder zum Wechsel von Spannrahmen A des ersten Rahmentyps auf Spannrahmen B des zweiten Rahmentyps ist anhand der Fig. 5 und 6 beschrieben:

So ist beispielhaft gemäß der Fig. 5 der Fahrzeugaufbau 3 des ersten Karosserietyps mit den bereits lose angefügten Karosserieseitenteilen 9 in der Arbeitsstation 5 angeordnet. Für eine Zustellung der noch im Spannrahmenmagazin 39 oberhalb der Arbeitsstation 5 gelagerten Spannrahmen A des korrespondierenden ersten Rahmentyps werden diese zunächst mittels der benachbarten Schlitten 37 querverschoben und in die in der Fig. 5 gezeigte Bereitstellungsposition I gebracht.

Darauffolgend werden gemäß der Fig. 5 mittels der jeweils linken Hubeinrichtung 35 des ersten und des zweiten Schlittens 37 die zugeordneten Tragsäulen 45 mitsamt der Spannrahmen A in eine Arbeitsposition II innerhalb der Arbeitsstation 5 vertikal nach unten verstellt. Die einander gegenüberliegenden Spannrahmen A sind gemäß der Fig. 5 in ihrer Arbeitsposition II gestrichelt angedeutet.

Anschließend werden die beiden benachbarten Querschlitten 37 aufeinander zu bewegt, um die, in der Arbeitsposition II befindlichen Spannrahmen A in eine Spannposition zu bringen, in der die Spannrahmen A in Druckanlage mit den nur grob angedeuteten Positioniersäulen 25 sind. Die Spannrahmen A werden dann mit den in der Fig. 2 angedeuteten Verriegelungselementen 27 verriegelt.

In dieser nicht gezeigten Spannposition positionieren die Spannrahmen A die Karosserieseitenteile 9 des ersten Fahrzeugtyps gegen den Fahrzeugaufbau 3 in eine definierte schweißgerechte Lageposition. Anschließend werden die Karosserieseitenteile 9 mittels der Schweißroboter 7 mit dem Fahrzeugaufbau 3 verschweißt. Nach dem Schweißvorgang werden die Spannrahmen A mittels der Schlitten 37 von ihrer Spannposition wieder zurück in die Arbeitsposition II verbracht und der Karosserieaufbau 3 wird einer folgenden Arbeitsstation zugeführt.

Die Fig. 6 zeigt die Arbeitsstation 5 nach einem erfolgten Karosseriewechsel vom Karosserieaufbau 3 des ersten Karosserietyps auf einen Karosserieaufbau 51 eines zweiten Karosserietyps mit entsprechenden Seitenteilen 53. Die Seitenteile 53 sind wie beim ersten Karosserietyp in einer der Arbeitsstation 5 vorgeschalteten Rüststation bereits lose an den Fahrzeugaufbau 51 gefügt worden. Mit dem Karosseriewechsel erfolgt auch ein Spannrahmenwechsel, bei dem die in Einsatz befindlichen Spannrahmen A des ersten Rahmentyps mit den Spannrahmen B des zweiten Rahmentyps ausgetauscht werden.

Für einen solchen Rahmenwechsel werden zunächst die Spannrahmen A des ersten Rahmentyps mittels der zugeordneten Hubeinrichtung 35 von der Arbeitsposition II zurück in die Bereitstellungsposition I in der z-Richtung vertikal angehoben. Darauffolgend bewegt sich das Schlitten-Paar 43 um einen Stellweg S₁ in der Querrichtung y (d. h. ausgehend von der Fig. 5 nach links). Dadurch werden die Spannrahmen B des zweiten Rahmentyps in die jeweilige Bereitstellungsposition I verstellt, wie es in der Fig. 6 gezeigt ist. Die in der Fig. 6 jeweils rechten Hubeinrichtungen 35 der beiden Schlitten 37 verstellen dann die Spannrahmen B in Vertikalrichtung von der Bereitstellungsposition I nach unten zur Arbeitsstation 5 in die gestrichelt angedeutete Arbeitsposition II.

Anschließend werden die beiden benachbarten Schlitten 37 in Y-Richtung gegenläufig aufeinander zu bewegt, damit die beiden Spannrahmen B die Karosserieseitenteile 53 in eine schweißgerechte Position gegenüber dem Fahrzeugaufbau 51 bringen. Nach der erfolgten Positionierung der Karosserieseitenteile 53 werden diese mit dem Karosserieaufbau 51 des zweiten Karosserietyps mittels der Schweißroboter 7 verschweißt. Anschließend werden die Spannrahmen B rückgestellt und der bearbeitete Karosserieaufbau 51 weiter zur nächsten Arbeitsstation transportiert.

Wie aus der Fig. 1 hervorgeht, sind insgesamt zwei Schlitten-Paare 43, also vier Einzelschlitten 37 in dem Spannrahmenmagazin 39 angeordnet. Entsprechend können hier beispielhaft mit den beiden Schlitten-Paaren 43 im Spannrahmenmagazin 39 in kompakter Anordnung sowie zeitsparend Spannrahmen A, B, C, D für vier unterschiedliche Karosserietypen bereitgestellt werden.

So sind in der Fig. 1, wie auch in der Fig. 5, die Spannrahmen A in ihrer Bereitstellungsposition I gezeigt. Bei einem Rahmenwechsel von den Spannrahmen A des ersten Rahmentyps auf die Spannrahmen C des dritten Rahmentyps sind die in der Fig. 1 gezeigten beiden Schlitten-Paare 43 um einen Stellweg S₂ im Rahmenmagazin 39 zu verschieben (d. h. gemäß der Fig. 1 nach rechts). Somit sind die Spannrahmen C des dritten Rahmentyps in die Bereitstellungsposition I gebracht.

Für den Fall, dass ausgehend von der Betriebslage in der Fig. 1 die Spannrahmen D des vierten Rahmentyps in die Bereitstellungsposition I gebracht werden soll, sind die beiden Schlitten-Paare 43 um den Stellweg S₃ nach rechts zu verstellen.

Bei dem Rahmenwechsel zwischen den Spannrahmen A des ersten Rahmentyps und den Spannrahmen B des zweiten Rahmentyps liegt die Wechselzeit in einer Größenordnung von ca. 10s.

Aufgrund größerer Stellwege s₂, s₃ ist die Wechselzeit bei einem Rahmenwechsel zwischen den Spannrahmen B und C, zwischen den Spannrahmen B und D oder zwischen den Spannrahmen A und D geringfügig auf bis zu maximal 3s erhöht.

## Patentansprüche

1. Arbeitsstation einer Fertigungsstraße zur Verbindung von- Karosserieteilen (3, 9) eines Kraftfahrzeugs, insbesondere zumindest ein Seitenteil (9) mit einem Karosserieaufbau (3, 51), mit einem Spannrahmenmagazin (39) zum Bereitstellen von Spannrahmen (A, B, C, D), das oberhalb- der Arbeitsstation (5) in einer Querrichtung (y) angeordnet ist, in welchem Spannrahmenmagazin (39) zumindest ein Schlitten (37)
angeordnet ist, der zumindest einen Spannrahmen (A, B, C, C) im Spannrahmenmagazin (39) verstellt, und einer Hubeinrichtung (35), die den Spannrahmen (A) zwischen dem Spannrahmenmagazin (39) und der Arbeitsstation (5) höhenverstellt, **Dadurch gekennzeichnet, dass** der Schlitten (37) zusammen mit der Hubeinrichtung (35) eine bewegungsgekoppelte Baueinheit (47) bildet, in der der Spannrahmen (A, B, C, D) gehaltert ist.

2. Arbeitsstation nach Anspruch 1, **dadurch gekennzeichnet, dass** der aus Schlitten (37) und Hubeinrichtung (35) bestehenden Baueinheit (47) jeweils zumindest ein Spannrahmen (A) eines ersten Rahmentyps und ein Spannrahmen (B) eines zweiten Rahmentyps zugeordnet sind, die jeweils einem ersten bzw. einem zweiten Karosserietyp angepasst sind.

3. Arbeitsstation nach Anspruch 1 oder 2, **dadurch gekennzeichnet, dass** jedem der beiden Spannrahmen (A, B) jeweils eine Hubeinrichtung (35) zugeordnet ist, so dass die beiden Spannrahmen (A, B) in Hubrichtung (z) unabhängig voneinander verstellbar sind.

4. Arbeitsstation nach einem der vorhergehenden Ansprüche, **dadurch gekennzeichnet, dass** die Hubeinrichtung (35) den Spannrahmen (A, B) zwischen einer Bereitstellu.ngsposition (I) in dem Spannrahmenmagazin und einer Arbeitsposition (II) verstellt, in der der Spannrahmen (A, B) in der Arbeitsstation (5) angeordnet ist.

5. Arbeitsstation nach Anspruch 4, **dadurch gekennzeichnet, dass** der Spannrahmen (A) in seiner Arbeitsposition (II) mittels des Schlittens (37) in Zustellrichtung (y) zum Karosserieaufbau (9, 51) in eine Spannposition verstellbar ist.

6. Arbeitsstation, nach einem der vorhergehenden Ansprüche, **dadurch gekennzeichnet, dass** die Arbeitsstation (5) bodenseitig einen Grundrahmen (13) zur Befestigung des der Arbeitsstation zugeführten Karosserieaufbaus (9, 51) aufweist.

7. Arbeitsstation nach einem der vorhergehende Ansprüche, **dadurch gekennzeichnet, dass** der Arbeitsstation (5) Positionieranschlage (25) zugeordnet sind, gegen die der Spannrahmen (A, B, C, D) mittels des Schlittens (37) in die Spannposition positioniert und der Spannrahmen (A, B, C, D) an den Verriegelungselementen (27) verriegelt wird.

8. Arbeitsstation nach einem der vorhergehenden Ansprüche, **dadurch gekennzeichnet, dass** dem der Arbeitsstation (5) zugeführten Karosserieaufbau (9, 51) jeweils ein Paar (43) benachbarter Schlitten (37) bzw. Baueinheiten (47) zugeordnet ist.

9. Arbeitsstation nach Anspruch 8, **dadurch gekennzeichnet, dass** jedem Schlitten von dem Schlitten-Paar (43) jeweils ein Spannrahmen (A, B, C, D) des ersten und des zweiten Rahmentyps zugeordnet sind, so dass die beiden Spannrahmen (A, B, C, D) des gleichen Rahmentyps die gegenüberliegenden Karosserieseitenteile (9, 53) eines korrespondierenden Karosserietyps halten.

10. Arbeitsstation nach Anspruch 9, **dadurch gekennzeichnet, dass** die benachbarten Schlitten (37) für eine Zustellbewegung der Spannrahmens (A, B, C, D) von der Arbeitsposition (II) in die Spannposition gegenläufig aufeinander zu bzw. für eine entgegengesetzte Öffnungsbewegung voneinander weg bewegbar sind.

11. Arbeitsstation nach einem der Ansprüche 3 bis 10, **dadurch gekennzeichnet, dass** bei einem Wechsel des Karosserieaufbaus (3, 51) vom ersten auf den zweiten Karosserietyp eine erste Hubeinrichtung (35) den im Einsatz befindlichen Spannrahmen (A) des ersten Rahmentyps in das Spannrahmenmagazin (39) rückstellt und eine zweite Hubeinrichtung (35) den Spannrahmen (B) des zweiten Rahmentyps zur Arbeitsstation (5) verstellt.

12. Arbeitsstation nach einem der vorhergehenden Ansprüche, **dadurch gekennzeichnet, dass** der Arbeitsstation (5) eine Rüststation vorgeschalten ist, in der die Karosserieteile (9, 53) loses mit dem Karosserieaufbau (3, 51) zusammenfügbar sind.

13. Fertigungsstraße mit einer Arbeitsstation nach einem der vorhergehenden Ansprüche.

14. Verfahren zur Zustellung und/oder zum Wechseln von Spannrahmen (A, B, C, D) in einer Arbeitsstation (5) nach einem der vorhergehenden Ansprüche 1 bis 12.

## Claims

1. Working station of a production line for connecting body parts (3, 9) of a motor vehicle, in particular at least one side part (9) to a body structure (3, 51), having a clamping frame magazine (39) for providing clamping frames (A, B, C, D), which clamping frame magazine (39) is arranged above the working station (5) in a transverse direction (y), in which clamping frame magazine (39) is arranged at least one carriage (37) which moves at least one clamping frame (A, B, C, D) in the clamping frame magazine (39), and having a lifting device (35) which moves the clamping frame (A) vertically between the clamping frame magazine (39) and the working station (5), **characterized in that** the carriage (37) forms, together with the lifting device (35), a structural unit (47) which is coupled in terms of movement and in which the clamping frame (A, B, C, D) is held.

2. Working station according to Claim 1, **characterized in that** the structural unit (47) composed of carriage (37) and lifting device (35) is assigned in each case at least one clamping frame (A) of a first frame type and one clamping frame (B) of a second frame type, which are each adapted to a first and second body type respectively.

3. Working station according to Claim 1 or 2, **characterized in that** each of the two clamping frames (A, B) is assigned in each case one lifting device (35) such that the two clamping frames (A, B) can be moved independently of one another in the lifting direction (z).

4. Working station according to one of the preceding claims, **characterized in that** the lifting device (35) moves the clamping frame (A, B) between a provision position (I) in the clamping frame magazine and a working position (II) in which the clamping frame (A, B) is arranged in the working station (5).

5. Working station according to Claim 4, **characterized in that** the clamping frame (A), when in its working position (II), can be moved by means of the carriage (37) in the delivery direction (y) with respect to the body structure (9, 51) into a clamping position.

6. Working station according to one of the preceding claims, **characterized in that** the working station (5) has, at the floor side, a base frame (13) for fastening the body structure (9, 51) which is supplied to the working station.

7. Working station according to one of the preceding claims, **characterized in that** the working station (5) is assigned positioning stops (25) against which the clamping frame (A, B, C, D) is positioned into the clamping position by means of the carriage (37) and the clamping frame (A, B, C, D) is locked on the locking elements (27).

8. Working station according to one of the preceding claims, **characterized in that** the body structure (9, 51) which is supplied to the working station (5) is assigned in each case one pair (43) of adjacent carriages (37) or assemblies (47).

9. Working station according to Claim 8, **characterized in that** each carriage of the carriage pair (43) is assigned in each case one clamping frame (A, B, C, D) of the first and second frame types, such that the two clamping frames (A, B, C, D) of the same frame type hold the opposite body side parts (9, 53) of a corresponding body type.

10. Working station according to Claim 9, **characterized in that** the adjacent carriages (37) can be moved towards one another in opposite directions for a delivery movement of the clamping frames (A, B, C, D) from the working position (II) into the clamping position, and can be moved away from one another for an opposite opening movement.

11. Working station according to one of Claims 3 to 10, **characterized in that**, in the event of a change of body structure (3, 51) from the first to the second body type, a first lifting device (35) retracts the clamping frame (A) of the first frame type, which is in use, into the clamping frame magazine (39), and a second lifting device (35) moves the clamping frame (B) of the second frame type to the working station (5).

12. Working station according to one of the preceding claims, **characterized in that** the working station (5) is positioned downstream of a setting-up station in which the body parts (9, 53) can be joined loosely to the body structure (3, 51).

13. Production line having a working station according to one of the preceding claims.

14. Method for delivering and/or changing clamping frames (A, B, C, D) in a working station (5) according to one of the preceding Claims 1 to 12.

## Revendications

1. Poste de travail d'une chaîne de production pour relier des pièces de carrosserie (3, 9) d'un véhicule automobile, notamment au moins une partie latérale (9) à une structure de carrosserie (3, 51), comprenant un dépôt de cadres de serrage (39) pour fournir des cadres de serrage (A, B, C, D), qui est disposé au-dessus du poste de travail (5) dans une direction transversale (y), dans lequel dépôt de cadres de serrage (39) est disposé au moins un chariot (37) qui déplace au moins un cadre de serrage (A, B, C, D) dans le dépôt de cadres de serrage (39), et un dispositif de levage (35), qui déplace en hauteur le cadre de serrage (A) entre le dépôt de cadres de serrage (39) et le poste de travail (5), **caractérisé en ce que** le chariot (37) forme conjointement avec le dispositif de levage (35) une unité constructive accouplée en mouvement (47), dans laquelle est retenu le cadre de serrage (A, B, C, D).

2. Poste de travail selon la revendication 1, **caractérisé en ce que** l'on associe à l'unité constructive (47) constituée du chariot (37) et du dispositif de levage (35) à chaque fois au moins un cadre de serrage (A) d'un premier type de cadre et un cadre de serrage (B) d'un deuxième type de cadre, qui sont adaptés à chaque fois à un premier, respectivement deuxième, type de carrosserie.

3. Poste de travail selon la revendication 1 ou 2, **caractérisé en ce que** l'on associe à chacun des deux cadres de serrage (A, B) à chaque fois un dispositif de levage (35), de sorte que les deux cadres de serrage (A, B) puissent être déplacés dans la direction de levage (z) indépendamment l'un de l'autre.

4. Poste de travail selon l'une quelconque des revendications précédentes, **caractérisé en ce que** le dispositif de levage (35) déplace le cadre de serrage (A, B) entre une position de fourniture (I) dans le dépôt de cadres de serrage et une position de travail (II), dans laquelle le cadre de serrage (A, B) est disposé dans le poste de travail (5).

5. Poste de travail selon la revendication 4, **caractérisé en ce que** le cadre de serrage (A) peut être déplacé dans sa position de travail (II) au moyen du chariot (37) dans la direction d'avance (y) vers la structure de la carrosserie (9, 51) dans une position de serrage.

6. Poste de travail selon l'une quelconque des revendications précédentes, **caractérisé en ce que** le poste de travail (5) présente, du côté du sol, un cadre de base (13) pour la fixation de la structure de la carrosserie (9, 51) acheminée au poste de travail.

7. Poste de travail selon l'une quelconque des revendications précédentes, **caractérisé en ce que** l'on associe au poste de travail (5) des butées de positionnement (25), contre lesquelles le cadre de serrage (A, B, C, D) est positionné dans la position de serrage au moyen du chariot (37) et le cadre de serrage (A, B, C, D) est verrouillé aux éléments de verrouillage (27).

8. Poste de travail selon l'une quelconque des revendications précédentes, **caractérisé en ce que** l'on associe à la structure de la carrosserie (9, 51) acheminée au poste de travail (5) à chaque fois une paire (43) de chariots adjacents (37), respectivement d'unités constructives (47).

9. Poste de travail selon la revendication 8, **caractérisé en ce que** l'on associe à chaque chariot de la paire de chariots (43) à chaque fois un cadre de serrage (A, B, C, D) du premier et du deuxième type de cadre, de sorte que les deux cadres de serrage (A, B, C, D) du même type de cadre retiennent les pièces latérales opposées de la carrosserie (9, 53) d'un type de carrosserie correspondant.

10. Poste de travail selon la revendication 9, **caractérisé en ce que** les chariots adjacents (37) peuvent être déplacés en sens inverse l'un vers l'autre pour un mouvement d'avance des cadres de serrage (A, B, C, D) de la position de travail (II) dans la position de serrage et à l'écart l'un de l'autre pour un mouvement d'ouverture opposé.

11. Poste de travail selon l'une quelconque des revendications 3 à 10, **caractérisé en ce que** dans le cas d'un changement de la structure de la carrosserie (3, 51) du premier au deuxième type de carrosserie, un premier dispositif de levage (35) ramène le cadre de serrage (A) du premier type de cadre en cours d'utilisation dans le dépôt de cadres de serrage (39) et un deuxième dispositif de levage (35) déplace le cadre de serrage (B) du deuxième type de cadre vers le poste de travail (5).

12. Poste de travail selon l'une quelconque des revendications précédentes, **caractérisé en ce que** le poste de travail (5) est placé en amont d'un poste de montage dans lequel les pièces de la carrosserie (9, 53) peuvent être assemblées lâchement à la structure de la carrosserie (3, 51).

13. Chaîne de production comprenant un poste de travail selon l'une quelconque des revendications précédentes.

14. Procédé pour amener et/ou remplacer des cadres de serrage (A, B, C, D) dans un poste de travail (5) selon l'une quelconque des revendications 1 à 12.
